**Europäisches Patentamt**

**European Patent Office**

**Office européen des brevets**

(19)

(11) Veröffentlichungsnummer: **0 023 883**
**A1**

(12) ## EUROPÄISCHE PATENTANMELDUNG

(21) Anmeldenummer: **80810087.9**

(22) Anmeldetag: **14.03.80**

(51) Int. Cl.³: **B 65 D 47/20,** A 47 F 1/035,
G 01 F 11/26

(30) Priorität: **16.03.79 AT 1985/79**

(43) Veröffentlichungstag der Anmeldung: **11.02.81**
**Patentblatt 81/6**

(84) Benannte Vertragsstaaten: **BE CH DE FR GB NL SE**

(71) Anmelder: **Pils, Helmuth, Schoberpass 46A, A-8781 Wald (AT)**

(72) Erfinder: **Pils, Helmuth, Schoberpass 46A, A-8781 Wald (AT)**

(54) Vorrichtung zur automatischen, massbestimmten Entleerung eines Behälters.

(57) Die Vorrichtung zur automatischen, maßbestimmten Entleerung von festem, z.B. pulverförmigem, rieselfreudigem und stückgeformtem, flüssigem oder pastösem Füllgut aus einem Behälter besteht aus einem handbetätigten Drehverschluß mit Dosierkammer, der schwenkbar am Auslauf des Behälters angeordnet ist. In der einen Schwenklage des Drehverschlusses nimmt die Dosierkammer das Füllgut auf, in der anderen Schwenklage gibt sie das Füllgut ab. Am Auslauf des Behälters ist ein Verbindungsteil (A) mit einem außermittigen Auslaufkanal (K), angeordnet, an dessen Mündung die Dosierkammer (11) des Drehverschlusses (B) ansetzt. An die Dosierkammer (11) schließt eine geschlossene Kammer (10) im Drehverschluß an.

Vorliegende Erfindung bezieht sich auf ein Verfahren mittels einer Öffnung in einem Verschluß eines Behälters oder im Behälter selbst, durch eine in dieser Öffnung beweglich angebrachte und mittels einer Druckknopfanordnung bewirkbarer Transportanordnung, stets eine gewisse Menge aus einem Behälter zu entleeren. (Transportanordnung auch Entleeranordnung benannt).

Die Erfindung beinhaltet auch Anordnungen für die Ausführung dieses Verfahrens.

Das Verfahren wird dadurch gekennzeichnet, daß ein Behälter mit oder ohne abnehmbarem Verschluß, eine Öffnung aufweist, in welcher eine bewegliche Transportanordnung angebracht ist, und mittels einer Druckknopfanordnung, und einer gewissen Umsturzlage des Behälters für jede Betätigung auf den Druckknopf, eine bestimmte Menge aus dem Behälter entleert.

Durch die Betätigung der Druckknopfanordnung verschiebt sich der Transportbehälter von geschlossener zur offenen Lage, wobei immer nur eine gewisse, vom Volumen des Transportbehälters bestimmte Menge aus dem Inhaltsbehälter transportiert wird, und zusätzlicher, durch die Entleerungsposition des Behälters zuströmender Inhalt, aufgrund der speziellen Beschaffenheit des Transportbehälters zurückgehalten wird.

Bei Nichtbetätigung des Druckknopfes geht der Transportbehälter durch Federkraft in geschlossene Lage zurück.

Der derzeit bekannte Stand der Technik ist, daß die maßbestimmte Entleerung eines Behälters mittels gewisser Masse, beispielsweise Löffel oder ähnlichen, manuell ausgeführt wird, wobei der Behälterverschluss abgenommen
(und wieder aufgesetzt) werden muss. Dieser Vorgang braucht
mehr Zeit als notwendig, ist umständlich und ungenau.

Der Zweck mit der vorliegenden Erfindung ist das Zustandekommen eines Verfahrens mit entsprechender Anordnung, um
ein bestimmtes Volumen eines Inhaltes, einfach, schnell
und genau zu entleeren, ohne den Verschluß des Behälters
zu entfernen.

Das Bedürfnis dieses Verfahrens ist in jedem Haushalt,
in Krankenhäusern, auf Arbeitsplätzen, in Gastwirtschaften
und vielen anderen Stellen zu finden.

Dieses Verfahren wird mittels einer beweglichen Entleeranordnung, die in einer Öffnung eines Behälters oder in einer
Öffnung eines aufsetzbaren/abnehmbaren Behälterverschlusses
angeordnet ist, ermöglicht. Mittels einer Druckknopfanordnung, die mit der Entleeranordnung verbunden ist, wird die
Entleerung eines Behälterinhaltes vorgenommen.

Die Erfindung wird nachstehend näher mit Hilfe einer Anzahl
von Ausführungsbeispielen der Anordnungen und mit Hinweisung
auf die beifügenden Zeichnungen erklärt.

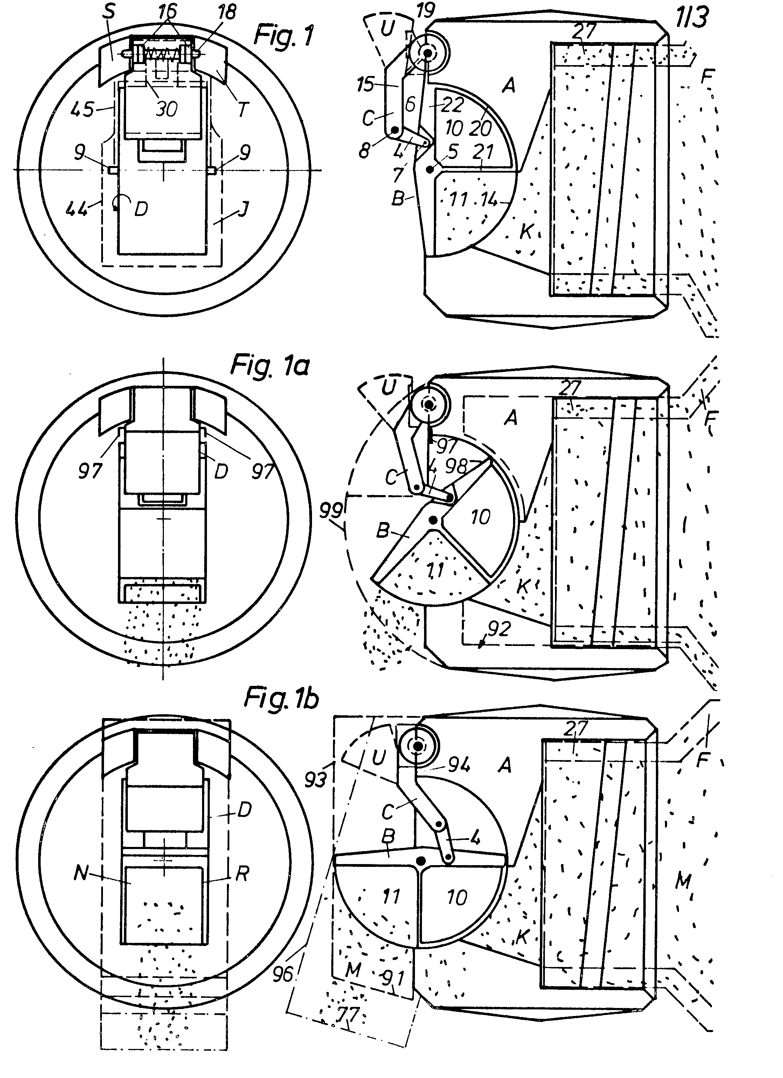

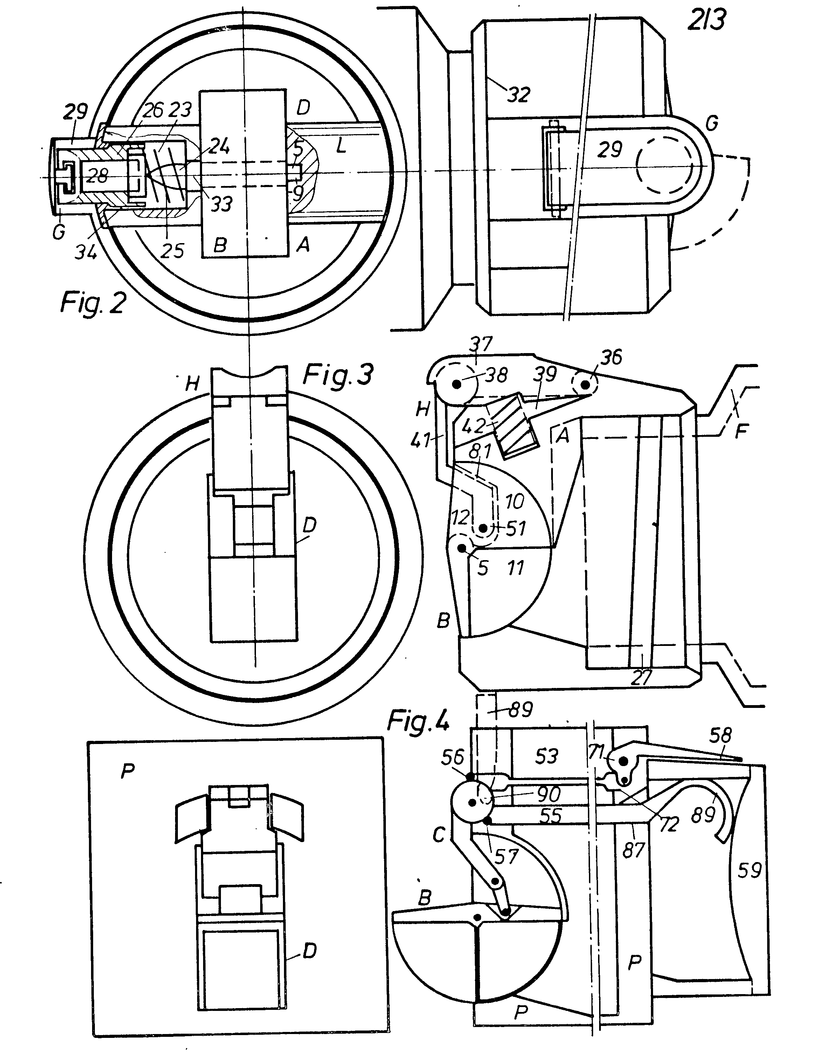

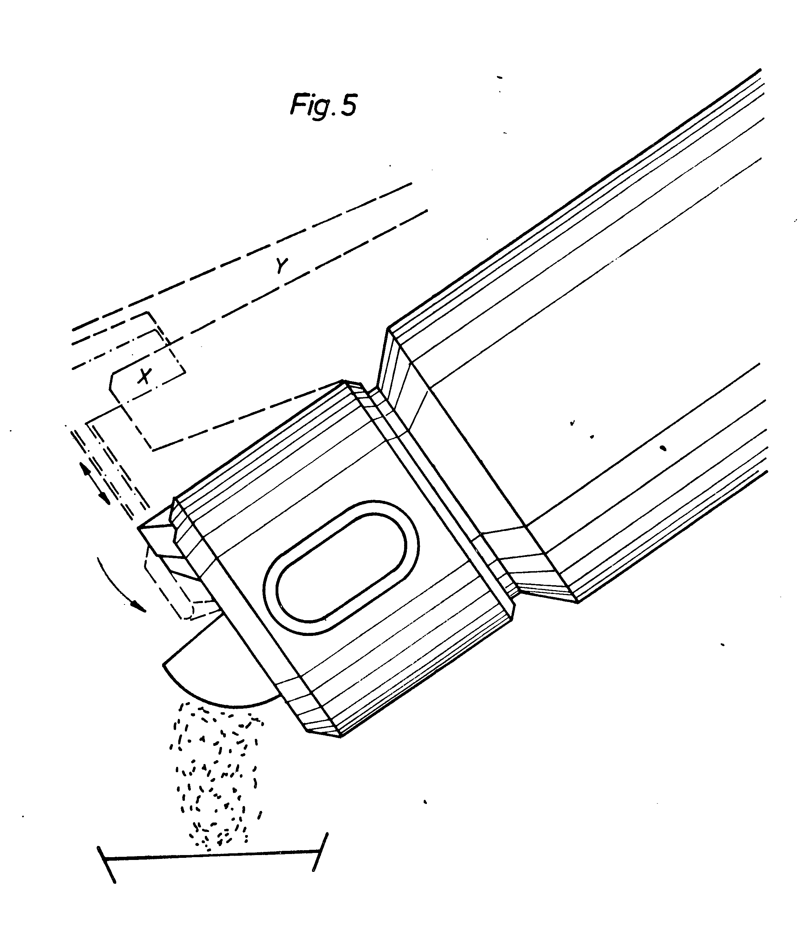

Fig. 1, 1a, 1b zeigen eine Verschlußentleerungsanordnung mit
drei verschiedenen Funktionsmomenten. Fig. 2 zeigt eine Verschlußentleeranordnung laut Fig. 1, und ist mit einer Seitendruckknopfanordnung versehen. Fig. 3 zeigt eine Verschlußentleeranordnung laut Fig. 1, welche mit einer Horizontaldruckknopfanordnung versehen ist. Fig. 4 zeigt einen Behälter, der mit einer Entleeranordnung laut Fig. 1 und ergänzenden Betätigungsanordnungen versehen ist. Fig. 5 zeigt
einen Inhaltsbehälter mit einer Verschlußentleeranordnung
laut Fig. 1 in rekommendierter Umsturzlage.

Mit Hinweisung auf Fig. 1, 1a, 1b wird eine sich auf vorliegende Erfindung gründende Verschlußentleeranordnung vorgezeigt.

Die Anordnung besteht aus einem verschlußgeformten Behälter A, welcher nach unten eine Hohligkeit mit einer Anschlußstelle 27 für einen Behälter F aufweist. Auf der Oberseite der Anordnung A ist ein halbzylindrischer Hohlraum D vorgesehen und beinhaltet eine halbzylindrische Entleeranordnung B, die mittels einer Achse 5 in den Achsellöchern 9 der Anordnung A, beweglich angeordnet ist.

Die Entleeranordnung B ist durch die Frontscheibe 22 und den Scheiben 2o und 21 Fig. 1 und durch den beiden Seitenscheiben N und R Fig. 1b begrenzt. Dies führt mit sich, daß diese Anordnung B zwei Kammern 11 und 1o aufweist, wovon die Kammer 10 geschlossen ist und die Kammer 11 in seinem bogenförmigen Teil 14 offen ist. Die Hohligkeit der Kammer 1o ist funktionslos, weshalb sie ausgefüllt und/oder an der Frontscheibe 22 an seinem Teil offen oder teilweise offen sein kann.

Die Verschlußanordnung A beinhaltet eine Hohligkeit K, welche mit der Raumbegrenzung an beiden Seiten mit der Begrenzung 14 der Kammer 11 beziehungsweise mit der Hohligkeitsbegrenzung der Anschlußstelle des Inhaltsbehälters F übereinstimmt. Eine Druckknopfanordnung C ist mit der Verschlußanordnung A an der Stelle 19 mittels einer Achse 18, die in den beiden mit der Anordnung A fest verbundenen Teile S und T eingreift, beweglich angeordnet. Die Druckknopfanordnung C besteht aus dem auf der Achse 18 beweglich angeordneten Teil 15,welcher mit einem Verbindungsarm 4 mittels einer Achse an der Stelle 8 beweglich verbunden ist und der Verbindungsarm 4 in seinem anderem Ende mittels einer Achse oder ähnlichen mit der Frontscheibe 22 an der Stelle 7 beweglich angeordnet ist. Um die Achse 18 befindet sich eine Feder 30, die so konstruiert und angeordnet ist, daß sie den Druckknopfarm 15 in eine solche Lage zwingt, daß die Entleeranordnung B die geschlossene Stellung einnimmt. Der Druckknopf 15 ist so konstruiert und angeordnet, daß er mit einem Finger (Zeigefinger) betätigt werden kann. Der strichlierte Teil U ist eine alternative Ausführung des Druckknopfes 15, welches zur Folge hat, daß man auch mit dem Daumen die Druckknopfanordnung betätigen kann.

Die Verschlußentleeranordnung laut Fig. 1, 1a, 1b , fungiert wie nachstehend erläutert.

Der Inhaltsbehälter F mit der Verschlußanordnung A versehen, wird von einer Hand umgriffen und in eine Umsturzlage, beispielsweise wie Fig. 5 zeigt, gebracht, wodurch der Inhalt M vom Behälter F über die Verbindungskammer K die offene Kammer 11 erreicht und füllt. Diese ungefährliche Lage beibehaltend und mit dem Zeigefinger (Daumen) den Druckknopf 15 betätigend, rotiert die Entleeranordnung B laut Fig. 1a, wobei die Kammer 11 ihren Inhalt zu entleeren beginnt und die Kammer 10 mit ihrer bogenförmigen Abschirmungsfläche 20 weiteren Inhaltszustrom verhindert. Fig. 1b zeigt die vollendete Funktion, welches voraussetzt, daß der Druckknopf 15 voll betätigt worden ist.

In dieser Lage hat die Entleeranordnung B ihren Inhalt M in der Kammer 11 gänzlich entleert. Für neuerliche Füllung der Kammer 11 unterlässt man die Krafteinwirkung des Fingers /Daumens auf den Druckknopf 15, wodurch die Entleeranordnung B mittels Federkraft der Feder 3o die geschlossene Lage laut Fig. 1 einnimmt. Die Entleerung kann wiederholt vorgenommen werden.

Mit Hinweisung auf Fig. 2 wird eine sich auf vorliegende Erfindung gründende Seitendruckknopfanordnung angeordnet, auf einer Verschlußentleeranordnung laut Fig. 1 vorgezeigt.

Die Seitendruckknopfanordnung G besteht aus einem Druckknopf 26, welcher in seinem oberen Ende mit einem Fingerkontaktteil 29 und in seinem unteren Ende 28 mit einem verlängerten,gewindeförmigen Achsenteil 24 beweglich verbunden ist. Der Druckknopf 26 ist in einer Hohligkeit 23, die in der Verschlußanordnung A und dessen Erhöhung L angebracht ist, verschiebbar angeordnet. Der untere Teil des Druckknopfes 26 hat eine Öffnung 28 von gleichem Querschnitt wie der gewindeförmige Achsenteil 24, welcher in diese Öffnung greifbar eingepasst ist. Zwischen dem unteren Druckknopfende und der Bodenfläche der Hohligkeit 23 ist eine Druckfeder 25 angeordnet. Die Stoppanordnung des Druckknopfes 26 besteht aus einer Umfangszunahme des Druckknopfkörpers 26, welche mit ihrer entstehenden Kante als Stoppanschlag gegen die Kante eines mit der Verschlußanordnung A fest verbundenen Teiles 34 dient. Der Fingerkontaktteil 29 ist mit seinem anderen Ende mittels einer Achse oder ähnlichen mit der Verschlußanordnung A an der Stelle 32 beweglich verbunden. Ein Verbindungsteil 33, welches den gewindeförmigen Teil 24 und die Achse der Entleeranordnung 5 umfasst, ist einer besseren Führung wegen von größerer diametralen Dimension.

Die Seitendruckknopfanordnung G laut Fig. 2 fungiert wie nachstehend erläutert.

Der Inhaltsbehälter F mit der Verschlußentleeranordnung A,G versehen wird von einer Hand umgriffen, wobei sich, beruhend auf welcher Seite der Anordnung A die Seitendruckknopfanordnung G angeordnet ist, mit Finger/Daumen den Fingerkontaktteil 29 betätigend der Druckknopf 26 in der Hohligkeit 23 gegen das Verbindungsstück 33 einschiebt, und durch die lagebeibehaltene Querschnittsöffnung 28 des unteren Druckknopfendes mittels den gewindeförmigen Achsenteil 24, welcher mit der Entleeranordnung B fest verbunden ist, eine Drehbewegung bewirkt, und aufgrund dieser, die Entleeranordnung B von geschlossener zur geöffneten Lage bringt.

Bei Unterlassen entsprechender Krafteinwirkung des Fingers/Daumens auf den Druckknopf 26, zwingt die Federkraft der Feder 25 den Druckknopf in die unbetätigte Lage, wodurch die mittels den Teilen 28/24 erhaltene Drehrichtung die Entleeranordnung von offener zur geschlossenen Lage bringt.

Mit Hinweisung auf Fig. 3 wird eine sich auf vorliegende Erfindung gründende Horizontaldruckknopfanordnung H angeordnet auf einer Verschlußentleeranordnung laut Fig. 1 vorgezeigt.

Die Horizontaldruckknopfanordnung H besteht aus einem Fingerkontaktarm 37, welcher an einem Ende mit der Verschlußanordnung A mittels einer Achse 36 oder ähnlichen und mit seinem anderen Ende mittels einer Achse 38 oder ähnlichen mit einem Verbindungsarm 41 beweglich angeordnet ist. Der Verbindungsarm 41 ist mit seinem knieförmigen Teil in einer Hohligkeit 12 in der Entleeranordnungskammer 1o eingepasst und mittels einer Achse 51 oder ähnlichen beweglich angeordnet. Die Verschlußanordnung A weist eine schlitzförmige Hohligkeit 39 auf, die das Eindrücken des Fingerkontaktarmes 37 ermöglichen soll. In dieser Hohligkeit 39 ist eine Druckfeder 42 zwischen den Fingerkontaktarm 37 und der Verschlußanordnung A passend angebracht. Die untere Fläche oder Flächenteil des Fingerkontaktarmes 37 bildet mit der Berührung der gegenüberliegenden Fläche oder Flächenteil der Hohligkeit 39 ein Stopp, welches der Öffnungsbegrenzung der Entleeranordnung B entspricht. Die Berührung der beiden Flächenteile im Punkt 81 bildet ein Stopp, welches der Schließbegrenzung der Entleeranordnung B entspricht.

Die Horizontaldruckknopfanordnung H laut Fig. 3 fungiert wie nachstehend erläutert.

Der Inhaltsbehälter F mit der Verschlußentleeranordnung A,H
versehen, wird von einer Hand umgriffen, und der Fingerkontaktarm 37 mittels Finger/Daumen betätigt. Aufgrund
der im Verhältnis zur Achse 5 exzentrisch angebrachten
Achsenverbindung 51 oder ähnlichen, und der Druckkraftrichtung mittels des Verbindungsarmes 41/37, verschiebt
sich die Entleeranordnung B von geschlossener zur offenen
Lage. Die Hohligkeit 12 dient hier als Bewegungsraum für
den unteren Teil des Verbindungsarmes 41.

Bei Unterlassen der Krafteinwirkung mittels Finger/Daumen
auf den Fingerkontaktarm 37, zwingt die Federkraft der
Feder 42 den Fingerkontaktarm 37 in die unbetätigte Lage
zurück, wodurch die Entleeranordnung B von offener die
geschlossene Lage einnimmt. Die Öffnungs- und Schließbegrenzung der Entleeranordnung B wird durch den Kontakt
eines unteren Flächenteiles des Fingerkontaktarmes 37 mit
einem gegenüberliegenden Flächenteil der Hohligkeit 39
beziehungsweise durch den Kontakt der beiden Flächenteile
im Punkt 81 erwirkt.

Mit Hinweisung auf Fig. 4 wird eine sich auf vorliegende
Erfindung gründende Entleeranordnung laut Fig. 1 und ergänzender Betätigungsanordnung direkt angebracht an
einem Inhaltsbehälter mit Handgriff versehen vorgezeigt.

Eine Entleer- und Druckknopfanordnung B,C laut Fig. 1 ist
an der Vorderseite eines Behälters P direkt angeordnet.
Ein Druckarm 58, welcher mittels einer Achse 71 oder ähnlichem an der Handgriffseite des Behälters P beweglich
angeordnet ist, ist mittels einer Verbindungsstange 53
mit der Druckknopfanordnung C mittels den beiden Achsenverbindungen 56 bzw. 72 beweglich verbunden. Der Druckarm 58 ist im Behälter P so angeordnet, daß dieser für
die Betätigung durchFinger/Daumen im Verhältnis zum
Handgriff, eine günstige Lage einnimmt. Ein Fingerschieber 55 ist mittels einer Achse 57 oder ähnlichen mit der Druckknopfanordnung C Teil 15 der Funktion entsprechend beweglich verbunden. Eine Hohligkeit 87 in der Handgriffseite des Behälters P dient zur Führung des Fingerschiebers 55, dessen Ende an dieser Seite für passende Anlegung des Fingers einen entsprechenden hier beispielsweise bogenförmigen Abschluss hat. Ein Handgriff 59 ist an der Rückseite des Behälters P, der Vorderseite gegenüberliegend, mit Rücksicht auf die befindlichen Betätigungsanordnungen 58,59 konstruiert und angebracht. Der Behälter P kann mit beiden oder nur mit einer der Betätigungsanordnungen 53/58, 55/89 versehen sein.

Die Entleeranordnung B,C direkt mit einem Behälter laut Fig. 4 verbunden, fungiert wie nachstehend erläutert.

Der Handgriff 59 des Inhaltsbehälters P von einer Hand wie üblich umgriffen und der Behälter P in eine gewisse Schieflage, beispielsweise wie Fig. 5 zeigt, gebracht, wodurch der Inhalt vom Behälter P die offene Kammer der Entleeranordnung erreicht und füllt. Diese ungefährliche Lage beibehaltend und mit einem Finger/Daumen eines der biden Betätigungsanordnungen an der Stelle 58 oder 89 betätigend, rotiert die Entleeranordnung B laut Fig. 1a, wobei die Kammer 11 ihren Inhalt zu entleeren beginnt und die Kammer 10 mit ihrer bogenförmigen Abschirmungsfläche 2o weiteren Inhaltszustrom verhindert. Der weitere, technische Vorgang der Entleeranordnung B,C ist in der Funktion der Verschlußanordnung laut Fig. 1, 1a und 1b vorhin auf Seite 3/4 erläutert worden. Neuerlicher Füll- und Entleervorgang wird durch die volle Anwendung der Betätigungsanordnungen 58 oder 89 ermöglicht.

Mit Hinweisung auf die vorangegangene Beschreibung der verschiedenen Ausführungsformen von Verschlußentleer- und Druckknopfanordnungen müssen nachstehend diesbezügliche Ergänzungen angeführt werden.

Die Mantelfläche der Verschlußentleeranordnung laut Fig. 1,
kann auch von anderer , geometrischer Form sein. Anstatt
rund kann sie vieleckig beispielsweise viereckig sein,
welches durch Vertiefungen laut Fig. 5 oder ähnlichem
eine bessere Greifstabilität ermöglicht. Ein abschirmender
Vorbau laut Fig. 1b ist mittels strichlierter Konturen
93 oder den punktstrichlierten Konturen 96, markiert, wodurch der Ausgang 91 bzw. 77 eine mehr konzentrierte
Entleerrichtung erhält. Auch nach oben hin ist die Erhöhung
für die Einlegung des Betätigungsfingers von vorteilhafter,
praktischer Bedeutung. Das Stopp für die Entleeranordnung
B in geöffneter Lage entspricht dem Kontakt der beiden
Kanten im Punkt 94 laut Fig. 1b, und das Stopp für die
geschlossene Lage der Anordnung B entspricht der Hohligkeit 98 an der Ecke der Frontscheibe 22 und ein in diese
Hohligkeit 98 passender Vorsprungsteil 97 der Anordnung A
laut Fig. 1a. Der halbzylindrische Hohlraum D kann auch
von anderer geometrischer Form sein, beispielsweise halb-
oder teilkugelförmig, wodurch auch die Entleeranordnung
B eine gleichgeometrische Aussenform erhält. Die Entleeranordnungskammern können auch einer anderen , innergeometrischen Form entsprechen, ohne ihrer beschriebenen Funktion
Änderung zuzuteilen.

Die Anschlußstelle 27 kann tiefer in die Verschlußanordnung
A, wie die strichlierten Konturen 92 laut Fig. 1a zeigen,
eingeführt werden. Der Anschluß 27 der Verschlußanordnung
A zum Inhaltsbehälter F kann mittels eingreifender Gewindeteile oder ähnlichem ermöglicht werden. Die Oberseite
der Verschlußanordnung A kann auch von anderer, geometrischer Form sein. Beispielsweise kugelförmig , wie die
strichlierte Kontur 99 laut Fig. 1a zeigt, wodurch die
Entleeranordnung tiefer in die Anordnung A versenkt ist.

-10-

Ohne Funktionsänderung kann auch die Hohligkeit K von anderer raumgeometrischer Form sein. Die Verschlußanordnung besteht aus passendem Plastmaterial oder anderem, für diesen Zweck anwendbarem Material. Die dimensionelle Grösse der Verschlußanordnung A, der Entleeranordnung B und der Druckknopfanordnung C,G und H kann verschieden sein. Die Grösse der Entleerkammer 11 kann der Grösse eines Volumens innerhalb von einem Milligramm bis Tonnen entsprechen. Letzterem ist der evtl. Anwendung der Entleeranordnung B für industrielle Zwecke zugemessen.

Die Verschlußentleeranordnung A,mit einem Behälter F dimensioniert , um mit der Hand umgriffen zu werden, ist für ein Entleervolumen von beispielsweise 1g, 1 Tee- 1 Kaffee- und 1 Esslöffel oder anderen, massbestimmten Volumeneinheiten gekennzeichnet.

Diese Entleeranordnung kann auch eine Entleerkammer enthalten, welche durch ihre spezielle Volumhohligkeit, Pillen oder ähnliches, stückweise auf beschriebener Art entleert.

Die Entleeranordnung B kann ihre Entleerfunktion auch in entgegengesetzter Richtung ausführen, wobei die Entleeranordnung B mit beispielsweise einer Seitendruckknopfanordnung G laut Fig. 2 für entgegengesetzte Rotation versehen ist, und die Verbindungskammer K dieser Entleerrichtung raumgeometrisch entspricht. Die Verschlußentleeranordnung A kann in ihrer vorliegenden Form anstatt einer halbzylindrischen mit einer ganzzylindrischen Entleeranordnung versehen sein, wobei letztere beispielsweise 4 Kammern, welche in Richtung der Verbindungskammer K alle offen sind, aufweist. Mit einer entsprechenden Druckknopf- und Stoppanordnung wird eine fortlaufende Rotationsrichtung ermöglicht. Kennzeichnend für eine solche Anordnung ist, daß die Entleerung einer Kammer gleichzeitig mit der Füllung der nächstfolgenden Kammer vor sich geht.

-11-

Mit Beibehaltung der beschriebenen Funktion, kann, ohne
vom Erfindungsgut abzuweichen, die halb- und ganzzylindrische oder andere , vorhin benanntenEntleeranordnungen
von verschiedener, technischer, sowie verschiedener formgeometrischer Konstruktion und verschiedener Anzahl von
Kammern, gekennzeichnet sein. Fig. 5 zeigt eine Verschlußentleeranordnung A,C mit seinem zugehörigen Inhaltsbehälter F. Die strichlierten Konturen deuten einen Handgriff
Y und einen in diesem beispielsweise verschiebbar angeordneten Druckknopf X, welches als eine alternative Ausführungsform einer Verschlußentleeranordnung A mit entsprechendem Druckknopfkomplement zeigt.

Jede Art von Stoffen in Pulverform und zunehmender, gröberer Art, sind für die Anwendung der Verschlußentleeranordnung geeignet.

Für die Bewahrung aromatischer Werte gewisser Stoffe, beispielsweise Kaffee, empfiehlt es sich, höchstmögliche Dichte
zwischen der Anordnung A und der Entleeranordnung B in gegeschlossener Lage zu erzielen. Dies kann auch mittels
einer speziellen Dichtungsfläche J auf der Frontseite 22
der Entleeranordnung B laut Fig. 1 angebracht, ermöglicht
werden. Diese Dichtungsanordnung besteht aus der Scheibe J,
welche an ihrer Kontaktseite mit der Anordnung A eine gummi-
oder plastelastische Dichtungsfläche oder Dichtungsring
oder ähnliches 44 aufweist. Diese Dichtungsanordnung J, 44
kann ungefähr in der Achsenmitte beendet oder mit der Dichtungsanordnung , bestehend aus einem Dichtungsring oder ähnlichem 45 laut Fig. 1, und an der Verschlußanordnung A
angeordnet, beweglich verbunden sein. Die vollkommene Abdichtung kann auch mittels eines aufgeschraubten oder
dichtend aufgesetzten Verschlusses auf die Oberseite der
Verschlußentleeranordnung A, erzielt werden.

Die Funktion beibehaltend kann der Druckknopfkörper 26 der Seitendruckknopfanordnung G laut Fig. 2 von verschiedener aussen- und innergeometrischen Form sein. Die befindliche Hohligkeit in ihm, welche den Eingang des gewindeförmigen Achsenteiles 24 ermöglicht, kann ausgefüllt und mit einem dem Achsenteil 24 entsprechenden, gewindeförmigen Eingang versehen sein. Die Funktion des Achsenteiles 24 kann auch durch ein Gewinde, welches der Öffnungs- und Schließfunktion der Entleeranordnung B entspricht, in der zylindrischen Mantelfläche der Hohligkeit 23 und einem entsprechenden, einpassenden Gewinde oder ähnlichem auf der zylindrischen Mantelfläche des Druckknopfes 26 erzielt werden. Für diese Konstruktion ist der Achsenteil 24 nicht mehr gewindeförmig. Aufgrund der dadurch erhaltenen Rotation des Druckknopfes 26 muß der Fingerkontaktteil 29 oder ähnliches so angeordnet sein, daß die Druckknopfrotation bei Betätigung ermöglicht und nicht merkbar friktionsmässig behindert wird. Die Drehfunktion der Entleeranordnung B kann auch dadurch ermöglicht werden, daß das Innere der Achse 5 eine Hohligkeit mit einem Gewinde aufweist, in welches eine gleichgewindige Stange eingreift und sich bei Betätigung verschiebt. Die linierte Führung des Druckknopfes 26 in der Hohligkeit 23 wird durch unzirkulären, beispielsw. viereckigen Gleitflächenumfang der Hohligkeit 23 und des Druckknopfkörpers 26 oder durch eine Nutenkonstruktion der beiden Berührungsgleitflächen erzielt. Die Feder 25 kann durch eine zweckmässige, beispielsweise Druckfeder , zwischen dem Fingerkontaktteil 29 und der Anordnung A angeordnet, ersetzt werden. Der Fingerkontaktteil 29 kann durch eine andere passende Fingerkontaktfläche, beispielsw. nur mit dem Druckknopfende verbunden, ausgetauscht werden. Dies führt mit sich, daß die Druckknopfkonstruktion und dessen Führung in der Hohligkeit 23 von erforderlicher Stabilität sind. Ihre Funktion beibehaltend kann die aussengeometrische Form der Erhöhung L verschieden sein. Die Anschlußverbindung der Fingerplatte 29 mit dem Druckknopfkörper 26 kann einer

-13-

anderen Konstruktion entsprechen, beispielsw. mittels
einer Achsenkonstruktion der benannten Teile, wodurch
das andere Ende der Fingerplatte 29 in der Anordnung A
verschiebbar angeordnet werden kann. Der gewindeförmige
Teil24 kann mit der Achse 5 direkt (materialmässig) verbunden sein, weshalb der Verbindungsteil 33 keine Notwendigkeit ist. Die Druckknopfanordnung G kann auch auf der
anderen Seite der Entleeranordnung angeordnet sein. Mit
der Funktion der Seitendruckknopfanordnung beibehaltend,
kann die Verschlußentleeranordnung jeder technischen und
geometrischen Konstruktion der vorhin beschriebenen Verschlußentleeranordnung A entsprechen. Durch eine umgekehrte Gewindekonstruktion der Druckknopfanordnung G
kann die entgegengesetzte Rotationsrichtung der Entleeranordnung erzielt werden.

Der Verbindungsarm 41 der Horizontaldruckknopfanordnung
H, laut Fig. 3, kann an der Anschlußstelle 37 mit einem
Druckknopf, welcher in einer für diesen Zweck vorgesehenen Hohligkeit in der Anordnung A, passend und in
dieser mit vorliegender Druckrichtung verschiebbar angeordnet, verbunden sein. Die Rückfederung des Druckknopfes
könnte beispielsw. der Seitendruckknopfkonstruktion G laut
Fig. 2 entsprechen.

Mit der Funktion der Horizontaldruckknopfanordnung H beibehaltend, kann diese Verschlußentleeranordnung jeder technischen und formgeometrischen Konstruktion der vorhin
beschriebenen Verschlußanordnungen und ihrer alternativen
Möglichkeiten entsprechen.

Ein Handgriff des Behälters P laut Fig. 4 kann oberhalb
der Entleeranordnung B, wie beispielsw. Fig. 5 zeigt, mit
einer entsprechenden Druckknopfanordnung angeordnet werden.
Diese Konstruktion eliminiert vorteilhaft die vorgezeigten, ergänzenden Betätigungsanordnungen 58 und 55. Ein Druckknopf laut Fig. 4 kann beispielsw. mit einem strichliert
angedeuteten Verbindungsarm 89 mit einer Druckknopfanordnung C im Punkt 9o mittels einer Achse oder ähnlichen beweglich verbunden sein. Der Behälter P oder dergleichen
mit einem Handgriff beispielsw. laut Fig. 5, kann auch
mit einer Entleer- und Druckknopfanordnung B, H. laut
Fig. 3 versehen sein. Die Füllung des Behälters P kann
durch eine obere oder rückwärtige Öffnung im Behälter
vorgenommen werden. Der Behälter P oder ähnliches kann in
jeder Position, welche die Entleerung ermöglicht, an einer
Wand, einem Gegenstand oder dergleichen fest angeordnet sein,
welches zur Folge hat, daß jede vorhin beschriebene Entleer-
und Druckknopfanordnung in erforderlicher Kombination, mit
dem Behälter komplettiert werden kann. Die Entleerfunktion
derEntleeranordnung B kann auch mittels einem Handgriffrad
oder Hebel oder ähnlichem direkt in Verbindung mit der
Achse 5 oder zweckmässig mit einem anderen Teil der Entleeranordnung B fest verbunden, bewerkstelligt werden.

In Bezug auf die Beschreibung der Entleeranordnung B müssen
einige Punkte nachstehend ergänzend erläutert werden.

Für gewisse hartkristallinische Stoffe, welche für Entleerung vorgesehen sind, ist es vorteilhaft, bewegliche Berührungsflächen der Entleeranordnung B gegenüber der Kontaktflächen der Anordnung A,so klein wie möglich zu halten,
da die Voraussetzungen für ein gewisses Einbremsen der rotierenden Entleeranordnung evtl. aufkommen können.
Mit Beibehaltung der vollen Entleerfunktion kann die Entleeranordnung B ohne den Seitenscheiben N und R laut Fig.
1b konstruiert werden. In diesem Falle besteht die bewegliche
Anordnung B aus den Teilen 22,20, und 21, welche mit ihrer
Seitenkante an die beiden Basflächen D der halbzylindrischen
Hohligkeit der Verschlußanordnung A abdichtend anliegen.
Eine andere Möglichkeit ist die Ausführung einer Anordnung A ohne den benannten Basflächen D, wodurch die Entleeranordnung B mit den Seitenscheiben N und R versehen ist.
Der obere Teil der Verschlußanordnung A ist für eine solche
Ausführung scheibenförmig, in welcher beispielsweise eine
rechteckförmige Öffnung vorgesehen ist. Die der Kammer 11
entsprechenden Seitenscheibenteile/N und R können durch
einen entsprechenden Vorbau, welcher ihrer geöffneten
Position gleicht, und/oder ihrer Funktion entspricht, der
Verschlußanordnung A ergänzend, hinzugefügt werden. Letzteres als Komplement für eine Entleeranordnung, ohne die
beiden Seitenscheiben N und R.

Bei unvollständiger, beispielsw. halber Betätigung der
Druckknopfanordnung, kann durch Beibehalten dieser ungefähren Position eine fortlaufende Entleerung des Inhaltes
bewerkstelligt werden. Mit einer Verschlußentleeranordnung A, laut vorangegangener Beschreibung, kann folglich
durch Ganzbetätigung der Druckknopfanordnung eine maßbestimmte,und mittels einer unvollkommenen, beispielsw.
einer Halbbetätigung der Druckknopfanordnung, eine maßunbestimmte, fortlaufende Entleerung des Inhaltes erzielt
werden.

Um das evtl. Stocken feinpulvriger Entleerstoffe zu verhindern, kann mittels eines beweglichen Teiles der Entleer-
oder Druckknopfanordnung, eines in der Verbindungskammer K
beweglich angeordneten Teiles, eine stockungsverhindernde
Bewegung vermittelt werden.

Die parallelen Seitenscheiben N,R können auch ganzzylindrisch
sein, wodurch die Entleeranordnung B vier, ungefähr gleichgroße Kammern aufweist, wovon die Kammern geschlossen
und die Kammer in ihrem bogenförmigen Teil offen sind,
und die Kammern sich bei geschlossener Lage der Entleeranordnung B, außerhalb der Verschlußentleeranordnung A
gegenüber der Kammer 11 bzw. der Kammer 10 befinden, wovon
die offene Kammer 8 als Fingereinlage dient und mittels Vor- und Rückbewegung der Entleeranordnung B die Öffnungs-
bzw. Schließfunktion bewerkstelligt, und dadurch einer
Betätigungsanordnung entspricht. Die Rückfederung der
Entleeranordnung kann auch mittels einer Metallfeder in
Verbindung mit der Achse 5 oder mit den Seitenscheiben N,R,
erzielt werden. Das Stopp für die Öffnungs- und Schließbegrenzung der Entleeranordnung B entspricht den Kanterhöhungen 1,2 der Seitenscheiben N,R, welche durch den
Anschlag an den inneren Öffnungskanten der Anordnung A
eine Vierteldrehung der Entleeranordnung B ermöglichen.

Für kleinere Volumgrössen der Entleeranordnung B kann die
Öffnungs- und Schließfunktion mittels Direktkontakt mit
dem Finger an der Frontscheibe, welche für diesen Zweck
evtl. speziell ausgeführt ist, bewerkstelligt werden.

Für gewisse mehr oder weniger flüssige Stoffe, ist die
Anwendung der Verschlußentleeranordnung A und P oder dgl.
in spezieller Ausführung in Bezug auf Abdichtung der Entleeranordnung B in geschlossener Lage gegenüber der Anordnung A nach aussen hin laut Fig. 1 oder ähnlichen
Abdichtungen, möglich.

Ein Behälter P oder dgl. kann mittels einer Öffnung mit
einer Entleeranordnungseinheit, Komplementform, komplettiert
werden.

P 198-31/Fa

12. März 1980

0023883

Aktenzeichen: 1985/79

Anmeldetag  : 1979 03 16

Klasse      : 42 E

Anmelder    : Pils Helmuth, in

------------------------------------------

Neue  Patentansprüche

―――――――――――――――

1. Dosierverschluss zur dosierten Entleerung von festem, z.B. pulverförmigem, rieselfreudigen und stückgeformtem, flüssigem oder pastösem Füllgut aus einem Behälter, bestehend aus einem schwenkbar am Auslauf des Behälters angeordneten, handbetätigten Drehverschluss mit Dosierkammer, die in der einen Schwenklage des Drehverschlusses das Füllgut des Behälters aufnimmt und in der anderen Schwenklage das Füllgut abgibt, d a d u r c h   g e k e n n z e i c h n e t , dass am Auslauf des Behälters (F) ein Verbindungsteil (A) mit einem aussermittigen Auslaufkanal (K) angeordnet ist, an dessen Mündung die Dosierkammer (11) des Drehverschlusses (B) ansetzt, und dass sich an die Dosierkammer (11) eine geschlossene Kammer (10) im Drehverschluss (B) anschliesst.

2. Dosierverschluss nach Anspruch 1,   d a d u r c h   g e k e n n z e i c h n e t , dass die Verschwenkung des Drehverschlusses (B) von seiner Aufnahme- in die Abgabestellung durch Fingerbetätigung auf die Basisfläche (22) der geschlossenen Kammer (10) erfolgt.

3. Dosierverschluß nach Anspruch 2, d a d u r c h
g e k e n n z e i c h n e t , daß an der Basisfläche (22)
der geschlossenen Kammer (10) eine Fingermulde angeordnet
ist.

4. Dosierverschluß nach Anspruch 1 bis 3, d a d u r c h
g e k e n n z e i c h n e t , daß der Drehverschluß (B)
eine halbkugelige Form hat und die Dosierkammer (11) die
Form eines Kugelsektors.

5. Dosierverschluß nach Anspruch 1, d a d u r c h
g e k e n n z e i c h n e t , daß die Verschwenkung des
Drehverschlusses (B) von seiner Aufnahme- in die Abgabestellung durch Betätigung eines federbelasteten Druckknopfes (C,G,H,U,X,Y) erfolgt.

6. Dosierverschluß nach Anspruch 5, d a d u r c h
g e k e n n z e i c h n e t , daß der Druckknopf (C,H)
aus einem Gelenkhebel (4,15,37,41) besteht, der mit seinem
einen Ende schwenkbar (Position 19,36) am Verbindungsteil
(A) und mit seinem anderen freien Ende schwenkbar an der
Basisfläche (22) des Drehverschlusses (B) angelenkt ist,
(Fig. 1, 1a, 1b; Fig. 3).

7. Dosierverschluß nach Anspruch 5 und 6, d a d u r c h
g e k e n n z e i c h n e t , daß eine Schenkelfeder (30)

auf der Achse (16) des Gelenkhebels (4,15) am Verbindungsteil (A) angeordnet ist, die sich einerseits am Verbindungsteil (A) und andererseits am Gelenkhebel (4,15) abstützt,
(Fig. 1, 1a, 1b).

8. Dosierverschluß nach Anspruch 5, d a d u r c h
g e k e n n z e i c h n e t , daß der Druckknopf (C) aus
einer axial in einer Ausnehmung (23) des Verbindungsteils
(A) gegen die Kraft einer Feder (25) verschiebbaren Hülsenkörper (26) besteht, der mit einem in Bewegungsrichtung
gewundenen Drehteil (24) verbunden ist, das an der Achse
(5) des Drehverschlusses (B) ansetzt, (Fig. 2).

9. Dosierverschluß nach Anspruch 5, d a d u r c h
g e k e n n z e i c h n e t , daß der dem Druckknopf (C)
zugeordnete Gelenkhebel (4,15) über weitere Gelenkhebel
(53,58 bzw. 55,87) fernbetätigbar ist, (Fig. 4).

10. Dosierverschluß nach einem oder mehreren der Ansprüche
1 bis 9, d a d u r c h   g e k e n n z e i c h n e t ,
daß das Verbindungsteil (A) lösbar mit dem Behälter (F)
über ein Schraubgewinde (27) oder eine Steckverbindung
verbindbar ist.

12. Dosierverschluß nach einem oder mehreren der Ansprüche
1 bis 10, d a d u r c h   g e k e n n z e i c h n e t ,

dass der Drehverschluss (B) in Richtung zur Abgabeseite mit einer eine Auslassöffnung (77, 91) 'freigebenden Abdeckhaube (92, 93, 96, 99) verkleidet ist, (Fig. 1a, 1b).

13. Dosierverschluss nach einem oder mehreren der Ansprüche

1 bis 11, d a d u r c h   g e k e n n z e i c h n e t ,

dass im Drehbereich des Drehverschlisses (B) innerhalb der

Ausnehmung im Verbindungsteil (A) Dichtungsflächen (44, 45) angeordnet sind, (Fig. 1).

14. Dosierverschluss nach Anspruch 1,   d a d u r c h

g e k e n n z e i c h n e t , dass die Verschwenkung des Drehverschlusses (B) in seine Aufnahmestellung durch Federkraft erfolgt.

15. Dosierverschluss nach den Ansprüchen 1 bis 3,

d a d u r c h   g e k e n n z e i c h n e t , dass der

Drehverschluss (B) in einer Ausnehmung (D) des Verbindungsteils  (A) schwenkbar gelagert ist und dass die Fingerbetätigung des Drehverschlusses (B) im  Bereich der Ausnehmung erfolgt.

16. Dosierverschluss nach einem oder mehreren der vorhergehenden Ansprüche 1 - 15,   d a d u r c h

g e k e n n z e i c h n e t , dass im Auslaufkanal (K) des Verbindungsteils (A) ein Bewegungselement mit Betätigung des Drehverschlusses (B) in Richtung auf die Mündung
des Auslaufkanals (K) bewegbar ist.

17. Dosierverschluss nach Anspruch 1, d a d u r c h
g e k e n n z e i c h n e t , dass das Aufnahmevolumen
der Dosierkammer (11) durch einen lösbar darin befestigten
Einsatz veränderbar ist.

0023883

1/3

Fig. 1

Fig. 1a

Fig. 1b

0023883

2/3

Fig. 2

Fig. 3

Fig. 4

3l3

*Fig.5*

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 1 765 622 (O.A. SCHOEN)<br>+ Gesamt +<br>-- | 1,2,5-10,13,14 |
| A | US - A - 1 710 295 (W.W. CAMPBELL)<br>+ Gesamt +<br>-- | 1-17 |
| A | US - A - 1 277 406 (J.W. GIBBONS)<br>+ Gesamt +<br>-- | 1-17 |
|  | US - A - 2 584 781 (B. BEATTY)<br>+ Gesamt +<br>-- | 10 |
| A | US - A - 1 784 255 (A. SLATEN)<br>+ Gesamt +<br>-- | 1-17 |
|  | FR - A1 - 2 274 029 (GENERAL FOODS)<br>+ Fig. 1 +<br>-- | 5,6,7,9 |
|  | US - A - 2 537 415 (N. LOEB)<br>+ Fig. 3,4 +<br>---- | 5,8 |

**KLASSIFIKATION DER ANMELDUNG (Int.Cl. 3)**

B 65 D 47/20

A 47 F 1/035

G 01 F 11/26

**RECHERCHIERTE SACHGEBIETE (Int. Cl. 3)**

A 47 F 1/00

G 01 F 11/00

B 67 C 9/00

B 65 D 47/00

A 47 J 47/00

A 47 G 19/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 20-06-1980 | BREINER |

EPA form 1503.1 06.78